Europäisches Patentamt

European Patent Office

Office européen des brevets

(19)

(11) Numéro de publication: **0 370 936**

**A1**

(12) # DEMANDE DE BREVET EUROPEEN

(21) Numéro de dépôt: **89480177.8**

(51) Int. Cl.⁵: **A47J 31/40**

(22) Date de dépôt: **22.11.89**

(30) Priorité: **23.11.88 FR 8815385**

(43) Date de publication de la demande:
**30.05.90 Bulletin 90/22**

(84) Etats contractants désignés:
**BE CH DE ES FR GB GR IT LI LU NL**

(71) Demandeur: **Coruzzi, Jean Pierre**
**51 boulevard Maréchal Joffre**
**F-06310 Beaulieu(FR)**

Demandeur: **Pentimenti, Roger**
**Résidence Pous Avenue des Diables Bleus**
**F-06360 Eze(FR)**

(72) Inventeur: **Coruzzi, Jean Pierre**
**51 boulevard Maréchal Joffre**
**F-06310 Beaulieu(FR)**
Inventeur: **Pentimenti, Roger**
**Résidence Pous Avenue des Diables Bleus**
**F-06360 Eze(FR)**

(74) Mandataire: **Hautier, Jean-Louis**
**Cabinet Hautier Office Méditerranéen de**
**Brevets d'Invention et de Marques 24 rue**
**Masséna**
**F-06000 Nice(FR)**

(54) **Machine à café automatique composée d'un plateau mobile circulaire percé d'alvéoles disposé entre deux plateaux fixes, le mouvement circulaire assurant les différentes phases de la préparation du café avec une étanchéité de chaque alvéole.**

(57) L'invention a pour objet une machine à café automatique.

Les différents postes pour la confection du café sont disposés au-dessus d'un ensemble de trois plateaux (5, 4, 6) qui se superposent ; entre deux flasques fixes est disposé un plateau médian (4) mobile en rotation percé d'orifices (7, 8, 9, 10) qui font office de logements pour la dose de café, la rotation dudit plateau médian (4) est assuré par un moyen d'entrainement, des encoches (18, 19, 20, 21) et des micro-contacts assurent la gestion des différentes fonctions aux différents postes, les flasques supérieurs (5) et inférieurs (6) sont percés d'orifices (11, 12, 13, 14, 15) qui correspondent pour les orifices (11, 12, 13) à l'accès aux logements (7, 8, 9, 10) des différents postes et à l'accès par la partie inférieure, pour les orifices (14 et 15) aux mêmes logements (7, 8, 9, et 10) des postes d'écoulement du café et de l'éjection de la galette de marc. Machine pour la confection du café.

Fig.7

## Machine à café automatique composée d'un plateau mobile circulaire percé d'alvéoles disposé entre deux plateaux fixes, le mouvement circulaire assurant les différentes phases de la préparation du café avec une étanchéité de chaque alvéole

L'invention a pour objet une machine à café automatique composée d'un plateau circulaire percé d'alvéoles, disposé entre deux plateaux fixes, le mouvement circulaire dudit plateau médian mobile assure le déplacement desdites alvéoles pour les différentes phases de la préparation du café et ce, avec un verrouillage et une étanchéité continue des alvéoles.

Il existe de très nombreux brevets qui décrivent des machines à café. Dans tous les cas de machines à café qui utilisent des plateaux mobiles circulaires pour mettre en place les alvéoles devant différents postes de travail, lesdites alvéoles ont des mouvements verticaux. Ces mouvements sont assurés, par exemple, par des vérins. Devant ces mouvements, le verrouillage du godet n'est pas parfait, de même l'étanchéité dudit godet pose des problèmes du fait de tous ces mouvements verticaux. En effet, les joints d'étanchéité ne résistent pas longtemps aux frottements lors des mouvements de montée et de descente. Les machines sont rapidement détériorées par l'eau, la poudre et le marc du café. De plus, ce manque d'étanchéité nuit à la qualité de la confection du café.

L'état de la technique peut être défini par les brevets suivants :

- FR-A-2.141.533 : le convoyeur est du type à plateau revolver et il est constitué par des alvéoles dans ledit plateau qui tourne pas-à-pas de façon à occuper successivement des positions d'approvisionnement en café moulu, de tassement, de filtrage et d'éjection du marc. Les dispositifs d'approvisionnement en café moulu, de tassement, de filtrage et d'éjection sont commandés mécaniquement par la cloche formant l'armature du vérin compris dans la machine.

- FR-A-1.597.037 : la machine à café comprend un support de chambres pouvant tourner autour d'un axe vertical et comportant au moins trois chambres agencées sous forme de trous verticaux, écartées de la même distance de l'axe de rotation du support et réparties en outre symétriquement de manière à obtenir le même intervalle angulaire entre deux chambres, la machine comportant en outre un dispositif d'entraînement faisant tourner le support de chambres à chaque fois, après un intervalle de pause, d'un angle correspondant à l'écartement des chambres, ainsi que des postes de remplissage, d'infusion et de rinçage disposés au dessus du support de chambres de manière que, dans les différentes positions d'arrêt du support, une des chambres soit située en dessous de chacun de ces postes, l'ensemble étant agencé de manière que les chambres soient déplacées par intermittence par le dispositif d'entraînement d'un poste à un autre et que, dans chaque position d'arrêt, il se produise simultanément un remplissage de la première chambre en poudre de café, une alimentation de la seconde chambre en eau d'infusion et une alimentation de la troisième chambre en eau de rinçage.

- FR-A-2.226.137 : machine automatique pour la préparation rapide d'infusions de café à doses désirées. Cette machine, qui fait l'objet de l'invention, se caractérise par un groupe distributeur comprenant deux plaques parallèles qui sont percées de trous coaxiaux et entre lesquelles se déplacent, par intermittence et de façon étanche, des récipients cylindriques capables de recevoir : dans une première position, une quantité dosée de poudre de café ; dans une deuxième position, des moyens pour comprimer la poudre et pour fournir ensuite l'eau chaude utilisée pour effectuer l'infusion et, dans une troisième position, des moyens pour effectuer la décharge de la masse de poudre épuisée en évitant le lavage ; dans ladite deuxième position, s'introduisent, dans le récipient cylindrique correspondant, d'un côté, un tamis mobile et de l'autre côté un filtre, ces deux éléments se déplaçant en sens contraires de façon à comprimer la poudre de café au juste degré avant l'introduction de l'eau chaude qui effectue l'infusion.

- FR-A-732.892 : perfectionnements aux machines pour la préparation automatique du café en boisson. Les cavités ou chambres cylindriques présentent en haut et en bas, sur les bords de leur paroi, une rainure dans laquelle sont logés des anneaux métalliques, mobiles dans lesdites rainures et supportés par des ressorts en hélice réagissant contre la pression exercée par les disques terminaux ou faces de la boite, anneaux situés à une distance déterminée l'un de l'autre et délimitant des chambres hermétiquement fermées. Des anneaux élastiques latéraux pourront éventuellement améliorer la fermeture hermétique déjà suffisante assurée par les anneaux métalliques.

- FR-A-1.184.141 : machine automatique pour la préparation du café, machine qui comprend un corps tournant avec un mouvement intermittent, ce corps portant une pluralité de cavités qui, lors des arrêts successifs de ce corps, se trouvent dans des positions dans lesquelles des organes appropriés accomplissent, dans l'ordre et en synchronisme avec le mouvement de ce corps, les opérations d'introduction d'une dose de café moulu dans la cavité, le passage forcé de l'eau chaude à travers le café se trouvant dans la cavité, et la distribution d'une dose de boisson ainsi obtenue, et enfin l'évacuation du café épuisé et le lavage de la cavité pour sa préparation pour le cycle subséquent, la machine comprenant en outre des moyens moteurs, d'alimentation en eau et de chauffage, agissant en synchronisme et en phase avec les mouvements intermittents dudit corps.

Ces différents brevets ne permettent pas de résoudre les problèmes d'étanchéité et de tassement de la poudre. Le poste de remplissage n'effectue pas en même temps le tassage du café. Le poste de remplissage est souvent défaillant car un effet de voûte se crée et la poudre de café ne tombe pas.

L'invention tend à éviter tous ces inconvénients.

La machine à café, selon l'invention, permet de verrouiller la fermeture de l'alvéole et d'obtenir une étanchéité parfaite de ladite alvéole lorsque celle-ci est entrainée d'un poste à l'autre tel que l'admission du café, l'admission de l'eau, l'écoulement du café, l'éjection de la galette de marc.

La machine à café selon l'invention est pourvue d'un dispositif qui assure, au niveau du même poste, le chargement en poudre de café et son compactage en une galette cylindrique occupant la totalité du volume de l'alvéole correspondante. Le compactage, intervenant lors de la phase de remplissage, dispense de le traiter à un autre poste en une phase distincte comme cela est le cas dans l'état de la technique. La dose de café compactée dans l'alvéole affleure les plans supérieurs et inférieurs du dispositif tournant, il ne subsiste donc pas d'espace vide à corriger entre les tamis lors de la phase d'infusion.

La machine à café automatique est du type comprenant un réservoir de café moulu avec un moyen de distribution mis en place au-dessus du poste d'admission de la poudre de café, un surpresseur pour l'admission de l'eau chaude au niveau du poste de confection et de l'écoulement du café, d'un électro-aimant actionnant un piston éjecteur au niveau du poste d'éjection de la galette de marc de café ; ces différents postes sont disposés au-dessus d'un ensemble de trois plateaux qui se superposent, deux plateaux sont fixes et font office de flasques, un flasque supérieur et un flasque inférieur ; entre ces deux flasques fixes, est disposé un plateau médian mobile en rotation, percé d'orifices qui font office de logements pour la dose de café, la rotation dudit plateau médian est assuré par un moyen d'entrainement, des moyens électromécaniques tels que des encoches et des micro-contacts ou micro-rupteurs assurent la gestion des différentes fonctions aux différents postes, les flasques supérieurs et inférieurs sont percés d'orifices qui correspondent pour les orifices à l'accès aux logements des différents postes d'admission du café, de la confection et de l'éjection de la galette de marc de café, et à l'accès par la partie inférieure, pour les orifices aux mêmes logements des postes d'écoulement du café et de l'éjection de la galette de marc ; chaque flasque comporte sur sa face en contact avec le plateau médian mobile et au niveau de l'orifice du poste de confection et d'écoulement du café, seul poste sous pression d'eau chaude, au moins une rainure qui reçoit un joint torique qui assure l'étanchéité périphérique de l'orifice logement du plateau médian mobile et qui se présente à ce poste ; le plateau médian comporte coaxialement une couronne dentée permettant sa rotation par entrainement par un motoréducteur qui est engrené par un pignon d'entraînement caractérisée par le fait que le plateau médian est percé de quatre orifices logements ; le flasque supérieur est percé de trois orifices eux-mêmes circulaires servant respectivement aux postes suivants :

A- admission du café en poudre et compactage ou tassage de la poudre sur le même poste ;

B- écoulement et confection du café

C- éjection des marcs ;

le flasque inférieur est percé de deux orifices permettant respectivement

A- l'écoulement du café

B- éjection des marcs

Au niveau de la circonférence du plateau médian mobile, la partie supérieure de la couronne dentée comporte quatre encoches disposées à 90° qui coopèrent avec les micro-contacts qui assurent la gestion des fonctions et qu'au niveau de la circonférence du plateau médian mobile, partie inférieure de la couronne dentée, deux encoches sont disposées décalées d'un angle (W) par rapport aux encoches supérieures ; ces deux encoches coopèrent avec deux micro-contacts qui assurent la gestion des fonctions.

Le plateau médian est pourvu, sur le côté latéral de l'une de ses faces, de quatres encoches permettant l'arrêt et la fabrication d'un café. Sur l'autre face dudit plateau médian est également taillé, sur le côté latéral de l'autre face, deux autres encoches décalées d'un angle W par rapport aux encoches d'arrêt et de fabrication du café. Ces encoches se trouvent donc à 180° de la circonférence. Deux interrupteurs sont disposés sur la partie fixe de la machine à 90° par rapport au plateau médian rotatif. Deux relais 220 V, dont les contacts sont reliés en parallèle, sont disposés sur une partie quelconque de la machine.

Le réservoir de café est cylindrique pour permettre la rotation d'une palette rotative dans le fond dudit réservoir, la palette est montée à l'extrémité d'un bras solidaire d'un axe central entrainé en rotation par un motoréducteur ; l'autre extrémité du bras reçoit une tige verticale qui fait office d'agitateur pour la poudre de café afin d'éviter l'effet de voûte.

L'extrémité de la palette se termine par une partie relevée et effilée qui a pour effet de remplir le logement de poudre de café mais également de tasser ladite poudre dans le logement.

L'angle (W) est d'environ 22°.

Les dessins ci-joints sont donnés à titre d'exemples indicatifs et non limitatifs. Ils représentent un mode de réalisation préféré selon l'invention. Ils permettront de comprendre aisément l'invention.

La figure 1 est une vue schématique vue de côté de la machine.

La figure 2 est une vue schématique vue de dessus d'un flasque supérieur, de la roue dentée avec ses encoches et ses minirupteurs ou micro-contacts.

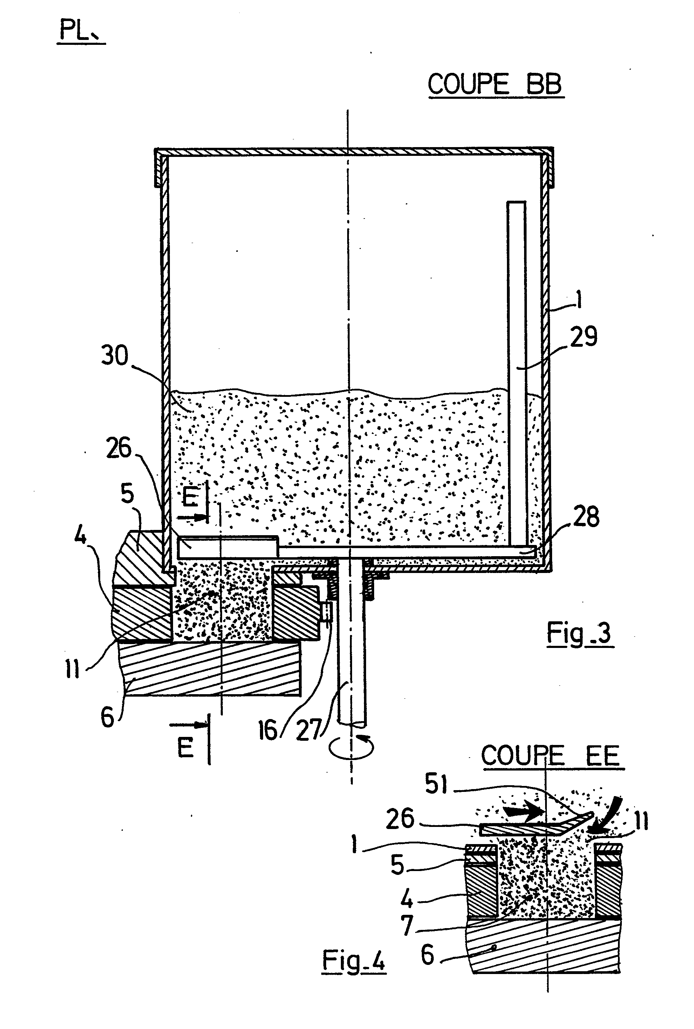

La figure 3 est une vue selon la coupe B-B représentée à la figure 2, elle met en évidence le poste d'admission et de tassage de la poudre de café.

La figure 4 est une vue de détail d'une extrémité du bras mettant en évidence la palette de distribution et de tassage du café, cette vue est une vue en coupe selon l'axe E-E représenté à la figure 3.

La figure 5 est une vue en coupe selon l'axe C-C représenté à la figure 2, elle met en évidence le poste de confection et d'écoulemnt du café, elle permet de mettre en évidence l'étanchéité.

La figure 6 est une vue en coupe selon l'axe D-D représenté à la figure 2, elle met en évidence le poste d'éjection de la galette de marc.

La figure 7 est une vue éclatée en perspective des flasques et du plateau médian mobile.

La figure 8 est une vue schématique du circuit électrique mettant en évidence la gestion des différentes fonctions, cycle pour un café, cycle pour deux cafés.

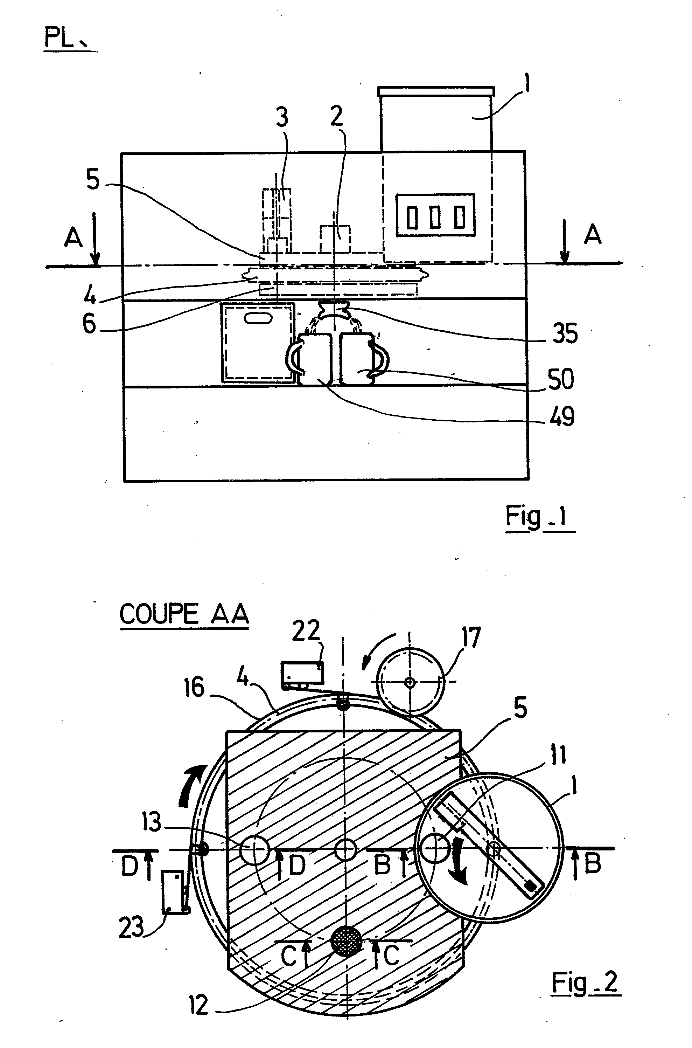

La machine à café selon l'invention est représentée schématiquement à la figure 1.

Cette machine à café est du type comportant un réservoir 1 de café moulu, ledit réservoir 1 étant disposé au niveau du poste d'admission du café en poudre.

La machine comporte également un réservoir d'eau chaude 2 disposé au niveau d'un poste d'admission d'eau chaude. Enfin, elle comporte un piston pour l'éjection de la galette de marc, ledit piston étant disposé au niveau du poste 3 d'éjection de la galette de marc.

Ces différents postes 1, 2 et 3 sont disposés au-dessus d'un ensemble de plateaux se superposant les uns les autres. Le plateau médian 4 est un plateau mobile rotatif. Les deux autres plateaux sont serrés entre lui, tout en autorisant sa rotation.

Le plateau supérieur fait office de flasque supérieur 5, le plateau inférieur fait office de flasque inférieur 6.

Le plateau médian 4 est percé d'orifices qui font office de logements pour la dose de café.

Selon le mode de réalisation représenté dans les figures, le plateau médian mobile 4 est pourvu de quatre orifices 7, 8, 9 et 10.

Le flasque supérieur 5 est pourvu de trois orifices 11, 12 et 13.

Le flasque inférieur 6 est pourvu de deux orifices 14 et 15.

Le flasque supérieur 5 est percé de trois orifices 11, 12 et 13 qui servent respectivement : .

a) à l'admission du café en poudre 11

b) à l'écoulement et à la confection du café 12

c) à l'éjection des marcs 13.

Le flasque inférieur 6 est percé de deux orifices permettant respectivement :

A) l'écoulement du café 14

B) l'éjection du marc 15.

La plateau médian mobile 4 est circulaire percé des quatre orifices 7, 8, 9, 10. Ces orifices font office de logement pour la confection du café. Il est pourvu d'une couronne dentée 16.

Cette couronne dentée 16 permet la rotation du plateau médian 4 par un moto-réducteur dont le pignon d'entrainement 17 vient engréner sur ladite roue dentée 16. La rotation du plateau médian 4 permet de présenter chaque orifice logement 7, 8, 9, 10 devant le ou les orifices des flasques supérieur 5 et inférieur 6 et ce, suivant l'action correspondant au poste pour la confection du café.

Au niveau de la circonférence du plateau médian mobile 4, la partie supérieure de la couronne comporte quatre encoches 18, 19, 20, et 21. Ces quatre encoches sont disposées à 90° et coopèrent avec les micro-contacts ou micro-rupteurs 22 et 23.

Cet ensemble d'encoches 18, 19, 20, 21 et de micro-contacts 22, 23 assurent la gestion électronique des différentes fonctions pour l'élaboration du café.

Au niveau de la circonférence du plateau médian mobile 4 et dans sa partie inférieure, ledit plateau médian 4 comporte deux encoches 24 et 25. Ces encoches 24, 25 sont décalées d'environ 22° (W = 22°) par rapport aux encoches supérieures 18, 19, 20 et 21 de la partie supérieure de la couronne. Ces deux encoches 24, 25 coopèrent avec deux micro-contacts 47, 48.

Le réservoir distributeur tasseur 1 de café en poudre est cylindrique. Il permet la rotation d'une palette 26 qui est montée rotative sur un axe 27. Ladite palette 26 est montée rotative dans le fond du réservoir 1. Elle est montée à l'extrémité d'un bras 28 solidaire de l'axe rotatif 27 entrainé en rotation par un motoréducteur (non représenté sur les figures).

A une extrémité, le bras 28 se termine par une palette 26 tandis qu'à l'autre extrémité, le bras 28 est pourvu d'une tige verticale 29 qui fait office d'agitateur pour la poudre de café 30 et éviter des effets de cavitation.

L'autre extrémité du bras 28 est terminée par une palette 26. Cette palette 26 a pour effet de remplir le logement de poudre de café 30 mais également de tasser ladite poudre 30 dans le logement par exemple 7. A cet effet, l'extrémité de la palette 26 se termine par une partie relevée et effilée 51.

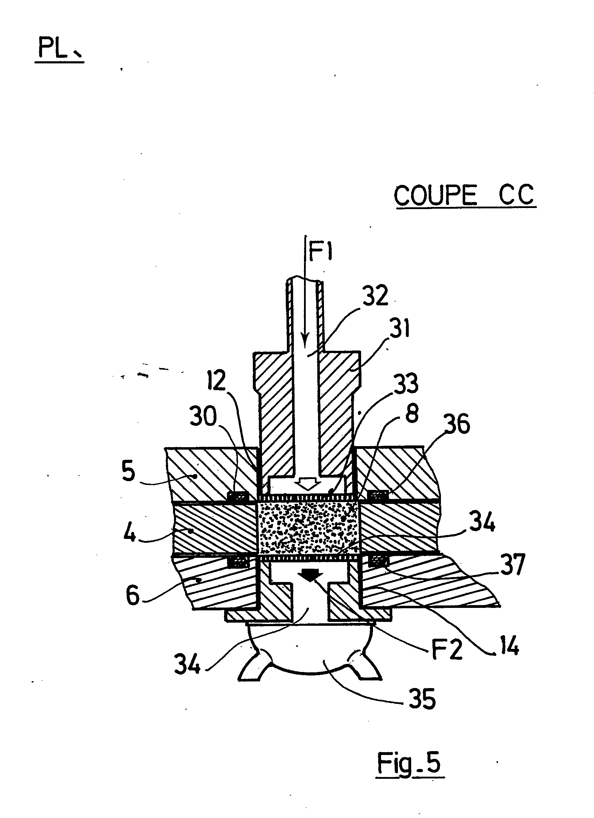

Dans la figure 5, est représenté en coupe en détail le poste de confection et d'écoulement du café.

C'est uniquement au niveau de ce poste que la poudre de café se trouve sous pression de l'eau chaude. A cet effet, un embout 31 vient dans l'orifice 12 du flasque supérieur 5. Cet embout 31 est pourvu d'une canalisation 32 qui se termine par une partie évasée pourvue d'une crépine 33 circulaire, qui vient en contact avec la galette de café contenue et logée dans un des oririces 7, 8, 9, 10 du plateau médian mobile 4.

L'eau chaude est envoyée sous pression selon la flèche F1 par un surpresseur ou motopompe (non représenté sur la figure 5).

La partie inférieure de la galette de café 30 est en contact avec une crépine inférieure 34 qui termine l'extrémité supérieure d'une canalisation 32, dont l'autre extrémité débouche dans le bec verseur 35 qui alimente les tasses de café 49 et 50 (voir la flèche F2).

Comme on peut le constater, la galette de café 30 logée dans un des orifices logements 7, 8, 9, 10 du plateau médian mobile 4 vient au niveau du poste de confection du café où elle est mise sous pression par la motopompe. Il n'y a aucun mouvement vertical pour ouvrir, fermer, verrouiller ou rendre étanche l'orifice logement 7, 8, 9 ou 10 utilisé pour la confection du café. Seul le joint torique 36 du flasque supérieur 5, et le joint torique 37 du flasque inférieur 6 assurent une étanchéité parfaite au stade de la confection et de l'écoulement du café. Il est à noter que les deux flasques 5, 6 et que le plateau médian mobile, en rotation, sont ajustés au 1/100 de millimètres près.

Les joints toriques 36, 37 sont mis en place dans des rainures prévues à cet effet sur les faces respectives du flasque 5 et du flasque 6 qui sont en contact avec le plateau médian mobile 4.

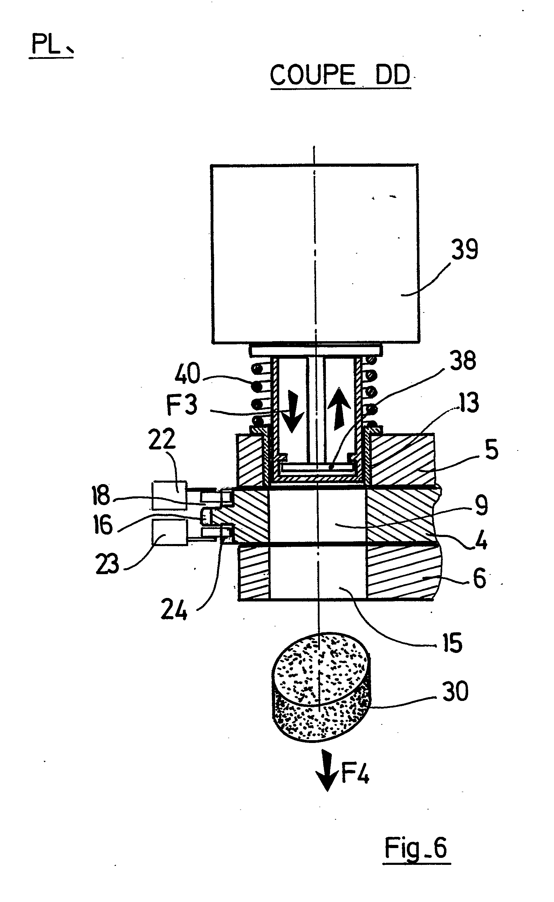

La figure 6 met en évidence le poste d'éjection de la galette de marc de café. Au niveau par exemple du trou de l'orifice circulaire 11 du flasque supérieur 5 est mis en place un piston éjecteur 38. Le piston éjecteur est actionné par un électro-aimant 39 et il revient en position initiale par l'intermédiaire d'un ressort de rappel 40. L'action électrique sur l'électro-aimant 39 permet au piston éjecteur 38 de pousser la galette de marc selon la flèche F3 et d'obtenir ainsi l'éjection de la galette de marc de café 30 tel qu'indiqué selon la flèche F4. La longueur de la tige du piston éjecteur 38 est suffisante pour traverser de part en part l'orifice logement du plateau 4, par exemple l'orifice logement 9 du plateau médian mobile 4 et l'orifice 15 du flasque inférieur 6.

Sur cette même figure 6, il est mis en évidence les dents de la couronne dentée 16 du plateau médian mobile 4. Il est mis également en évidence les minirupteurs 22 et 23 ainsi que les encoches supérieures 18, 19, 20 ou 21 ou les encoches inférieures 24 ou 25.

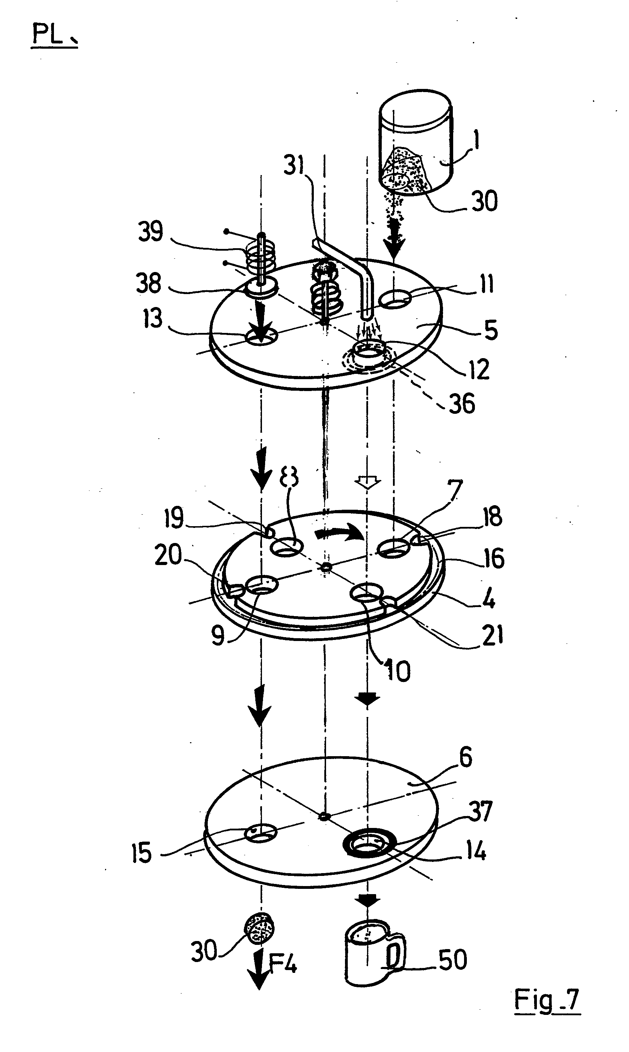

La figure 7, qui représente une vue éclatée du flasque supérieur 5, du flasque inférieur 6 et du plateau médian 4 mobile en rotation, met en évidence la position des différents orifices 11, 12, 13 du flasque supérieur 5 par rapport aux différents postes d'admission du café 11, de la confection et de l'écoulement du café 12, de l'éjection du marc 13. Les joints toriques 36 et 37 sont représentés en pointillés, ils mettent en évidence la manière d'assurer l'étanchéité au niveau d'un poste qui est sous pression et ce, dans des conditions d'efficacité et de simplicité.

Ainsi, au niveau du flasque inférieur 6, elle met en évidence la position des orifices 15 et 14 qui sont utilisés d'une part pour l'éjection de la galette de marc de café 15 et d'autre part pour l'écoulement du café 14.

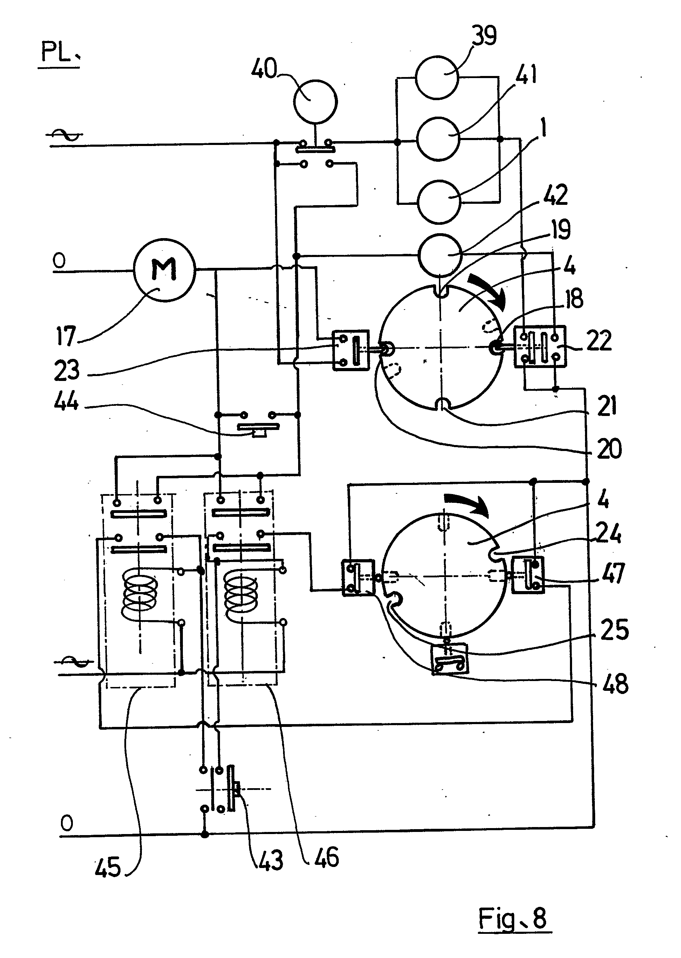

Dans le schéma représenté à la figure 8, sont représentés : un contact cylindre volumétrique en 40 ; l'électro-aimant 39 qui est utilisé pour l'éjection de la galette de marc de café 30 et qui actionne le piston éjecteur 38 ; le groupe pompe surpresseur 41 qui permet l'injection d'eau chaude par la canalisation 32 ; le réservoir distributeur de café en poudre 1 ; une électrovanne d'eau 42 ; la partie supérieure du plateau médian mobile en rotation 4 avec ses quatre encoches 18, 19, 20, et 21 mais également ses micro-contacts ou rupteurs 22 et 23. Il y a lieu de noter, sur ce schéma de fonctionnement, que le micro-contact 22 est double et ce, selon si on décide d'engager un cycle pour un seul café ou pour deux cafés.

Le plateau médian mobile 4 est représenté dans sa partie inférieure mettant en évidence les encoches inférieures 24 et 25. Ces deux encoches sont décalées par rapport aux encoches supérieures 18, 19, 20 et 21.

Sont également représentés sur ce schéma de la figure 8 : l'interrupteur 43 pour un cycle pour deux cafés, l'interrupteur de mise en route générale 44, des relais 45 et un relai 46.

Le schéma électrique permet de comprendre aisément qu'étant donné la mise en place du contacteur double 22, selon que l'utilisateur appuie sur l'interrupteur 44 de mise en route générale, il obtiendra un cycle pour un café si celui-ci agit également après avoir actionné l'interrupteur de mise en route générale 44 sur l'interrupteur 43 spécifique pour deux cafés le cycle de café sera engagé.

Description du fonctionnement de la machine à café à plateau médian rotatif 4 percé de quatre alvéoles ou orifices logement 7, 8, 9, 10, permettant le fonctionnement du cycle d'écoulement "deux tasses" sans utilisation de basses tensions, et donc de systèmes électroniques, cela par l'utilisation de deux relais 45, 46 associés à deux interrupteurs 43, 44 et des encoches taillées 18, 19, 20, 21 dans le plateau médian 4 à 180°.

L'appareil permet, par le peu d'éléments utilisés, un prix de revient modique de l'ensemble de cette machine.

Fonctionnement :

La machine à plateau médian rotatif ci-dessus décrite, permet l'écoulement d'un café par l'arrêt du disque médian 4 à chaque quart de tour de 90°. Il est nécessaire, lorsque l'utilisateur le désire, de pouvoir commander l'écoulement de deux tasses + deux tasses ou deux tasses seulement ou une tasse + deux tasses à l'aide de seulement deux contacts à poussoir 43, 44, pouvant être des contacts ne supportant que de faibles intensités.

Description de la machine :

Le plateau médian 4 est pourvu, sur le côté latéral de l'une de ses faces, de quatres encoches 18, 19, 20, 21 permettant l'arrêt et la fabrication d'un café. Sur l'autre face dudit plateau médian 4 est également taillé, sur le côté latéral de l'autre face, deux autres encoches décalées d'environ 22° (cet angle n'étant pas impératif pour le fonctionnement du système) par rapport aux encoches d'arrêt et de fabrication du café. Ces encoches se trouvent donc à 180° de la circonférence. Deux interrupteurs 43, 44 sont disposés sur la partie fixe de la machine à 90° par rapport au plateau médian rotatif 4. Deux relais 220 V, dont les contacts sont reliés en parallèle, sont disposés sur une partie quelconque de la machine.

Fonctionnement de l'appareil :

Lorsque l'utilisateur presse sur le contact "deux tasses", les deux relais se ferment et restent fermés par la circulation du courant dans leur bobine et par l'intermédiaire des deux interrupteurs. Les contacts de ces relais étant montés en parallèle cette manoeuvre permet de maintenir le circuit en marche. Le plateau médian 4 commençant son mouvement rotatif, une des encoches, par l'intermédiaire du premier contact, permet le décollement du premier relais, le second étant toujours fermé. Lorsque le plateau médian 4 s'arrête après une rotation de 90°, le café s'écoule. A la fin de l'écoulement, le second relais étant fermé, la machine peut entreprendre la fabrication d'un second café après une rotation de 90° qui, dès son départ par l'entremise de la seconde encoche, décollera le second relais.

La confection d'un seul café est obtenu par la pression de l'interrupteur "une tasse". Le fonctionnement continu est obtenu par un interrvpteur qui schunte le contact de marche.

## REFERENCES

1. Réservoir distributeur de café
2. Poste d'admission d'eau chaude pour la confection et l'écoulement du café
3. Poste d'éjection de la galette de marc
4. Plateau médian mobile
5. Flasque supérieur
6. Flasque inférieur
7. Orifice logement du plateau médian mobile
8. Orifice logement du plateau médian mobile
9. Orifice logement du plateau médian mobile
10. Orifice logement du plateau médian mobile
11. Orifice correspondant aux trois postes du flasque supérieur
12. Orifice correspondant aux trois postes du flasque supérieur
13. Orifice correspondant aux trois postes du flasque supérieur
14. Orifice correspondant aux deux postes du flasque inférieur
15. Orifice correspondant aux deux postes du flasque inférieur
16. Couronne dentée
17. Pignon d'entrainement
18. Encoche de la partie supérieure du plateau médian mobile
19. Encoche de la partie supérieure du plateau médian mobile
20. Encoche de la partie supérieure du plateau médian mobile

21. Encoche de la partie supérieure du plateau médian mobile

22. Micro-contacts ou micro-rupteurs

23. Micro-contacts ou micro-rupteurs

24. Encoche de la partie inférieure du plateau médian mobile

25. Encoche de la partie inférieure du plateau médian mobile

26. Palette

27. Axe rotatif

28. Bras

29. Tige verticale

30. Poudre de café

31. Embout

32. Canalisation

33. Crépine

34. Crépine inférieure

35. Bec verseur

36. Joint torique

37. Joint torique

38. Piston éjecteur

39. Electro-aimant

40. Ressort de rappel

41. Surcompresseur

42. Electrovanne d'eau

43. Interrupteur de café

44. Interrupteur de mise en route

45. Relai

46. Relai

47. Micro-contacts

48. Micro-contacts

49. Tasse de café

50. Tasse de café

51. Partie relevée et effilée de la palette 26

F1, F2, F3, F4 Flèches

W. Angle 22°

**Revendications**

1. Machine à café automatique du type comprenant un réservoir (1) de café moulu avec un moyen de distribution mis en place au-dessus du poste d'admission de la poudre de café, un surpresseur (41) pour l'admission de l'eau chaude au niveau du poste de confection et de l'écoulement du café, d'un électro-aimant (39) actionnant un piston éjecteur (38) au niveau du poste d'éjection de la galette de marc de café (30) ; ces différents postes sont disposés au-dessus d'un ensemble de trois plateaux (5, 4, 6) qui se superposent, deux plateaux sont fixes et font office de flasques, un flasque supérieur (5) et un flasque inférieur (6) ; entre ces deux flasques fixes, est disposé un plateau médian (4) mobile en rotation percé d'orifices (7, 8, 9, 10) qui font office de logements pour la dose de café, la rotation dudit plateau médian (4) est assuré par un moyen d'entrainement (17), des moyens électro-mécaniques tels que des encoches (18, 19, 20, 21) et (24, 25) et des micro-contacts ou micro-rupteurs (22, 23) assurent la gestion des différentes fonctions aux différents postes, les flasques supérieurs (5) et inférieurs (6) sont percés d'orifices (11, 12, 13, 14, 15) qui correspondent pour les orifices (11, 12, 13) à l'accès aux logements (7, 8, 9, 10) des différents postes d'admission du café, de la confection et de l'éjection de la galette de marc de café, et à l'accès par la partie inférieure, pour les orifices (14 et 15) aux mêmes logements (7, 8, 9, et 10) des postes d'écoulement du café et de l'éjection de la galette de marc ; chaque flasque (5 ou 6) comporte sur sa face en contact avec le plateau médian mobile (4) et au niveau de l'orifice (12 ou 14) du poste de confection et d'écoulement du café, seul poste sous pression d'eau chaude, au moins une rainure qui reçoit un joint torique (36, 37) qui assure l'étanchéité périphérique de l'orifice (7, 8, 9 ou 10) logement du plateau médian mobile (4) et qui se présente à ce poste ; le plateau médian (4) comporte coaxialement une couronne dentée (16) permettant sa rotation par entraînement par un motoréducteur qui est engrené par un pignon d'entraînement (17) caractérisée par le fait

que le plateau médian (4) est percé de quatre orifices logements (7, 8, 9, 10) ; le flasque supérieur (5) est percé de trois orifices (11, 12, 13) eux-mêmes circulaires servant respectivement aux postes suivants :

A- admission du café en poudre (11) et compactage ou tassage de la poudre sur le même poste ;

B- écoulement et confection du café (12)

C- éjection des marcs (13) ;

le flasque inférieur (6) est percé de deux orifices (14, 15) permettant respectivement

A- l'écoulement du café (14)

B- éjection des marcs (15)

2. Machine à café selon la revendication 1 caractérisée par le fait

qu'au niveau de la circonférence du plateau médian mobile (4), la partie supérieure de la couronne dentée (16) comporte quatre encoches (18, 19, 20, 21) disposées à 90° qui coopèrent avec les micro-contacts (22, 23) qui assurent la gestion des fonctions et qu'au niveau de la circonférence du plateau médian mobile (4), la partie inférieure de la couronne dentée (16) comporte, entre autres, deux encoches (24, 25) qui sont disposées décalées d'un angle (W) par rapport aux encoches supérieures (18, 19, 20, 21) ; ces deux encoches (24, 25) coopèrent avec deux micro-contacts (47, 48) qui assurent la gestion de la fonction "deux tasses".

3. Machine à café selon la revendication 2 caractérisé par le fait

que le plateau médian (4) est pourvu, sur le côté latéral de l'une de ses faces, de quatres encoches

(18, 19, 20, 21) permettant l'arrêt et la fabrication d'un café ; sur l'autre face dudit plateau médian (4) est également taillé, sur le côté latéral de l'autre face, deux autres encoches décalées d'un angle (W) par rapport aux encoches d'arrêt et de fabrication du café ; ces encoches se trouvent donc à 180° de la circonférence ; deux interrupteurs (43, 44) sont disposés sur la partie fixe de la machine à 90° par rapport au plateau médian rotatif (4) ; deux relais 220 V, dont les contacts sont reliés en parallèle, sont disposés sur une partie quelconque de la machine ; lorsque l'utilisateur presse sur le contact "deux tasses", les deux relais se ferment et restent fermés par la circulation du courant dans leur bobine et par l'intermédiaire des deux interrupteurs ; les contacts de ces relais étant montés en parallèle cette manoeuvre permet de maintenir le circuit en marche ; le plateau médian (4) commençant son mouvement rotatif, une des encoches, par l'intermédiaire du premier contact, permet le décollement du premier relais, le second étant toujours fermé ; lorsque le plateau médian (4) s'arrête après une rotation de 90°, le café s'écoule ; a la fin de l'écoulement, le second relais étant fermé, la machine peut entreprendre la fabrication d'un second café après une rotation de 90° qui, dès son départ par l'entremise de la seconde encoche, décollera le second relais ; le fonctionnement continu est obtenu par un interrupteur qui schunte le contact de marche.

4. Machine à café selon la revendication 1 caractérisée par le fait
que le réservoir (1) de café est cylindrique pour permettre la rotation d'une palette rotative (26) dans le fond dudit réservoir, la palette (26) est montée à l'extrémité d'un bras (28) solidaire d'un axe central (27) entrainé en rotation par un motoréducteur ; l'autre extrémité du bras (28) reçoit une tige verticale (29) qui fait office d'agitateur pour la poudre de café afin d'éviter l'effet de voûte.

5. Machine à café selon la revendication 4 caractérisée par le fait
que l'extrémité de la palette (26) se termine par une partie relevée et effilée (51) qui a pour effet de remplir le logement de poudre de café (30) mais également de tasser ladite poudre dans le logement.

6. Machine à café selon la revendication 2 caractérisée par le fait
que l'angle (W) est d'environ 22°.

PL、

Fig _1

COUPE AA

Fig _2

PL.

COUPE BB

1

29

30

26

5

4

11

6

E

E

16 27

28

Fig.3

COUPE EE

51

26

1

5

4

7

6

Fig.4

PL、

COUPE CC

F1

32

31

12

30

33

8

36

5

4

34

6

37

34

F2

14

35

Fig.5

PL.

COUPE DD.

Fig.6

PL⟍

Fig. 7

PL.

Fig. 8

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,X | FR-A-2141533 (G. DONOT)<br>* le document en entier *<br>--- | 1 | A47J31/40 |
| D,X | FR-A-1597037 (M. HEER)<br>* le document en entier *<br>--- | 1 | |
| D,X | FR-A-2226137 (OLYMPIA EXPRESS)<br>* le document en entier *<br>--- | 1 | |
| D,X | FR-A-732892 (GRILLI)<br>* le document en entier *<br>--- | 1 | |
| D,X | FR-A-1184141 (MECCANICA MODERNA)<br>* le document en entier *<br>--- | 1 | |
| A | DE-A-3438539 (SENGER)<br>* figure *<br>--- | 1 | |
| A | FR-A-2576883 (RENEKA)<br>* figure 1 *<br>----- | 2 | **DOMAINES TECHNIQUES RECHERCHES (Int. Cl.5)**<br><br>A47J |

Le présent rapport a été établi pour toutes les revendications

| Lieu de la recherche | Date d'achèvement de la recherche | Examinateur |
|---|---|---|
| LA HAYE | 19 FEVRIER 1990 | SCHARTZ J. |